Europäisches Patentamt

European Patent Office

Office européen des brevets

(19)

(11) EP 0 779 535 B1

(12) **EUROPEAN PATENT SPECIFICATION**

(45) Date of publication and mention
of the grant of the patent:
**25.06.2003 Bulletin 2003/26**

(51) Int Cl.⁷: **G03B 35/08**, G02B 7/10,
H04N 13/00

(21) Application number: **96119278.8**

(22) Date of filing: **02.12.1996**

(54) **Camera with variable deflection**

Kamera mit variabler Ablenkung

Caméra à déviation variable

(84) Designated Contracting States:
**DE FR GB IT**

(30) Priority: **11.12.1995 GB 9525309**

(43) Date of publication of application:
**18.06.1997 Bulletin 1997/25**

(73) Proprietor: **THOMSON multimedia
92648 Boulogne Cédex (FR)**

(72) Inventor: **Chikazawa, Yoshiharu
Yokohama 221 (JP)**

(74) Representative: **Ahrens, Thomas, Dipl.-Phys. et al
Deutsche Thomson-Brandt GmbH,
Licensing & Intellectual Property,
Karl-Wiechert-Allee 74
30625 Hannover (DE)**

(56) References cited:
**EP-A- 0 170 747          EP-A- 0 410 419
WO-A-88/10449          WO-A-91/09343**

- **PATENT ABSTRACTS OF JAPAN vol. 95, no. 02, 31 March 1995 & JP 06 308427 A (CANON INC), 4 November 1994, & JP 06 308 427 A**
- **PATENT ABSTRACTS OF JAPAN vol. 013, no. 329 (P-904), 25 July 1989 & JP 01 093727 A (SHARP CORP), 12 April 1989, & JP 01 093 727 A**
- **PATENT ABSTRACTS OF JAPAN vol. 013, no. 330 (E-793), 25 July 1989 & JP 01 093984 A (SHARP CORP), 12 April 1989, & JP 01 093 984 A**
- **PATENT ABSTRACTS OF JAPAN vol. 013, no. 330 (E-793), 25 July 1989 & JP 01 093983 A (SHARP CORP), 12 April 1989, & JP 01 093 983 A**

## Description

The present invention relates to a camera with variable deflection and to a stereoscopic camera system using such cameras.

Known cameras used in stereoscopic applications do not differ in principle from normal cameras and comprise an objective lens system, which receives the light emitted from a target object, and an intermediate optic system, which forms the light beam into an appropriate shape for the following image device, which creates pixel signals and is formed by an electronic image device.

Known stereoscopic camera systems use two or more different angle images. In order to obtain two or more different angle images at the same time, two or more cameras, depending on the number of images required, have to be used. At the time of taking the stereoscopic image, each camera forms special convergence angles with each of the other cameras. In the further discussion, the number of cameras is chosen as two. Then, the only convergence angle is the angle formed by the two cameras focused on the target object. Further, the convergence angle is related to the viewing position of the observer. If, for example, the target moves, the two cameras must be focused onto the moving target under the condition that the convergence angle has to be kept in an appropriate range. This in turn implies that the cameras have to be moved and rotated independent of each other by motors under the conditions that the convergence angle, as well as the distance between the cameras, and the distance between the cameras and the target object have to be kept to appropriate values, otherwise no stereoscopic effect will be created during the display. Therefore, a large mechanical system comprising motors and respective control systems is needed which makes the camera system large and heavy. Further it is not easy to change the convergence angle rapidly as the distance between the cameras and the target changes.

FR 2 699 296 shows a camera system for the generation of stereoscopic images using two single cameras, wherein the distance of the camera and their convergence angle can be changed automatically as function of the distance of the target object. In the known system the cameras are moved and rotated as a whole by motor means on a supplying arm to change the convergence angle.

Further the article "A Study of an Autostereocopic Camera System Using Liquid Prisms"; Okimura (of NTT Human Interface Laboratories) et al, D-369, Proceedings of the 1994 IEICE Spring Conference (Institute of Electronics, Information and Communication Engineers), page 7-102, shows a stereoscopic camera system, wherein a vari-angle prism is placed in the light path between the target object and each of the two cameras. A similar system is described in JP-A-6 308 427.

A vari-angle prism is an electro-optically induced deflection device. Such kind of devices are described e.g. in the articles "A Planar Electrooptic-Prism Switch", from I. P. Kaminow et al.; IEEE Journal of Quantum Electronics, August 1975 and ""Electro-optically induced deflection in liquid-crystal waveguides", J. P. Sheridan et al; Journal of Applied Physics, Vol. 45, No 12, December 1974.

The known camera systems show the above mentioned disadvantages, i.e. it is not easy to change the convergence angle rapidly as the distance between the cameras and the target changes.

It is therefore an object of the present invention to provide a camera with variable deflection and a stereoscopic camera system using such cameras wherein the handling of the cameras is easier and the complexity of the system is reduced.

This object is solved by the subject matter of the independend claims. Preferred embodiments are subject of the dependent claims.

The present invention relates to a camera with an objective lens system, an intermediate lens system, which forms the incident light beam, and an image device wherein a controllable light deflecting device is located between the objective lens system and the intermediate lens system.

Such a controllable light deflecting device of the camera can be any device, which allows the controllable deflection of an incident light beam, like for example an electro-optical device, such as a vari-angle prism or a vari-angle plate.

It is one advantage of such a camera that movable target objects can be recorded without moving or rotating the whole camera by a user.

The image device can be formed by an electronically image device for creating pixel signals. The objective lens system is rotatable by a rotation mechanism. The combination of a rotable objective lens and a controllable light deflecting device has the advantage, that a very wide range of convergence angles can be covered, but it is not necessary to rotate the whole camera. Instead it is sufficient just to rotate the objective lens. Therefore, smaller motors can be used.

Both the rotation mechanism and the controllable light deflecting device can be controlled with the help of a common convergence angle signal.

Further the invention relates to a camera system using at least two of the above described cameras which can be focused at a target object and include controllable light deflecting devices, wherein the convergence angle between each two of the cameras and the object can be controlled.

To set the camera system at the necessary positions, at least one of said cameras can be provided with a moving mechanism for manually or automatic control. For good stereoscopic impressions the distance between said two cameras is controlled such that the ratio

$$R = D/d \text{ is about } 50,$$

with

D:     distance between camera system and target object;

d:     distance between said two cameras of the camera system.

Further each camera can be provided with a focus controller for controlling the optics of the camera.

Further the rotation mechanism controllers and the controllers of the light deflection devices are controlled by a common convergence angle signal, which can be supplied by, for example, a conventional sensor which measures the distance between the camera and said target object.

Preferably all controllers of the camera system according to the invention are controlled by a distance signal. This distance signal is converted by a signal converter into a convergence angle signal used for the vari-angle prism controllers and the rotation mechanism controllers.

Further advantages and details of the invention are described with the aid of preferred embodiments with reference to the accompanying drawings, wherein:

Fig. 1     shows a basic embodiment of a camera according to the invention;

Fig. 2     shows a first embodiment of a stereoscopic camera system using cameras according to the embodiment of Fig. 1;

Fig. 3     shows a second embodiment of a stereoscopic camera system;

Fig. 4     shows a diagram of a prior stereoscopic camera system.

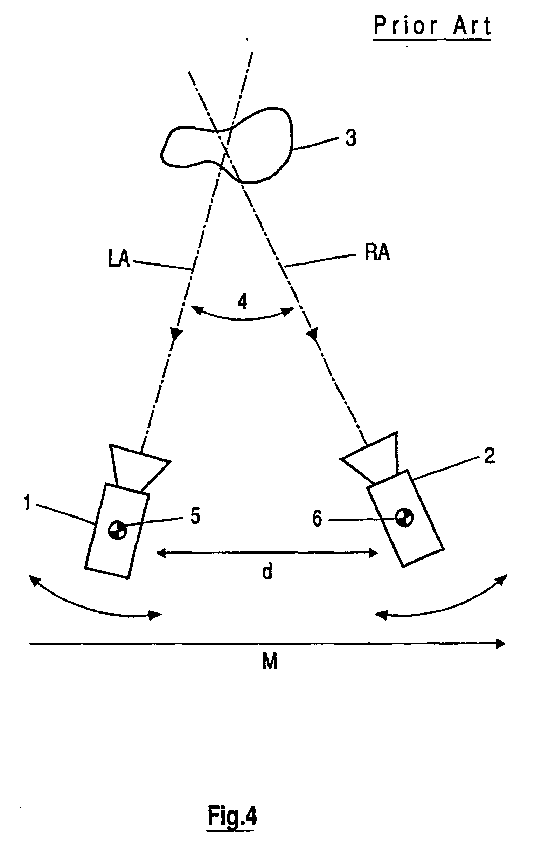

Fig. 4 shows a stereoscopic camera system according to the prior art, wherein two cameras 1, 2 are focused onto a target object 3, so that a convergence angle 4 is enclosed between an optical axis LA of the left camera and an optical axis RA of the right camera 2.

Both cameras 1, 2 can be independently rotated around a respective centre of rotation 5, 6. Further the cameras can be moved, e.g. such that the distance d between them is varied and/or as the whole camera sytem is moved in any direction, indicated by arrow M for one coordinate. As it is clear from Fig. 4, the cameras are moved and rotated as a whole in respect to their optical axes.

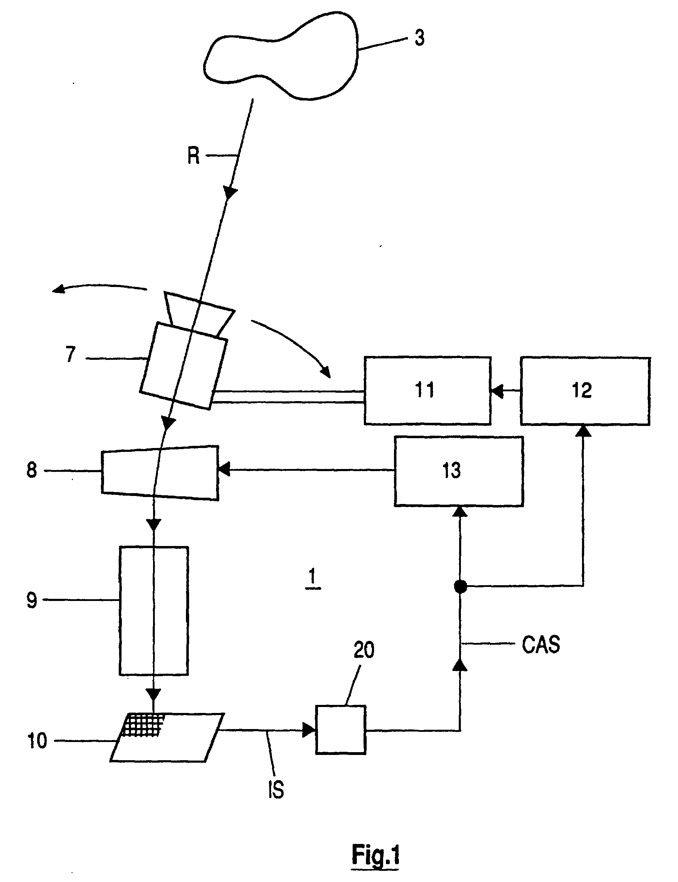

Fig. 1 shows a preferred embodiment according to the present invention, which is a camera, wherein an objective lens system 7 captures the incident light rays R from a target object 3. This objective lens system 7 is rotatable by a rotation mechanism 11, which is controlled by a controller 12. The light from the objective lens system 7 passes through a vari-angle prism 8, wherein the deflection angle can be controlled. Such vari-angle prisms are known in the art. The light passes through an intermediate bus system 9 which can be viewed as a beam forming optics, and is incident onto an image device 10, which is usually an electronic image device. The deflection angle of the vari-angle prism 8 is controlled as a function of a convergence angle signal CAS by a controller 13.

It is preferred that the signal CAS is determined by detecting means 20, which get input signals IS from said image device 10. Signals IS are a mass for the position of object 3 in relation to the direction of the whole camera 1. As said signal IS depends also on control parameters for rotation mechanism 11 and prism 8, a closed loop control of signal CAS can be realsied.

Of course, also other kind of detecting means are possible which detect the relative position of object 3. Such means may work with electromagnetical, optical and/or acoustical ray detection and may include as well receiving means as transmitting means for said rays.

With the use of said deflection angle controllable device 8 it is not necessary to rotate the whole camera, instead it is only necessary to rotate the objective lens system 7 so that the necessary motors (not shown) can be of a smaller size.

The embodiment is not restricted to the use of a vari-angle prism 8, but every electronical and/or optical controllable device capable of controlling the deflection of a light beam can be used.

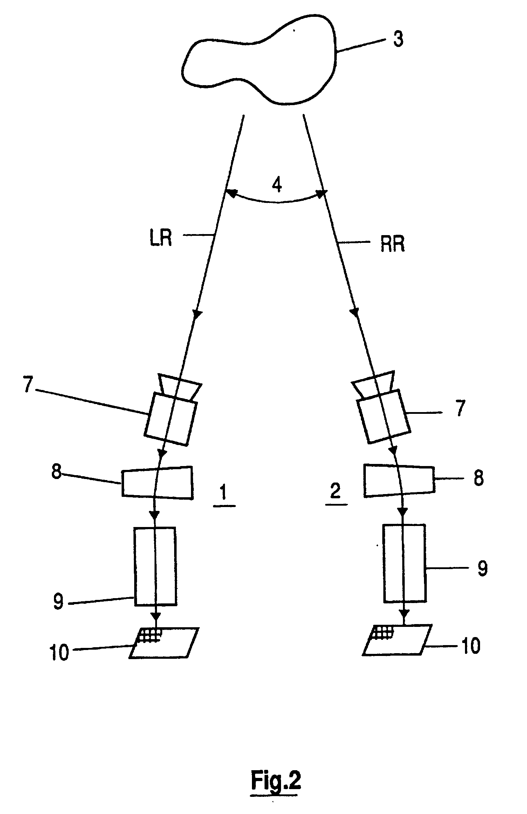

Fig. 2 shows the basic illustration of a stereoscopic camera system using two cameras according to Fig. 1.

The left camera 1 having objective lens system 7 captures the incident light rays LR from a target object 3.

The right camera 2 is symmetrical to the left camera 1 and receives rays RR and includes also an objectice lens 7, a vari-angle prism 8, a intermediate bus system 9, and an image device 10.

The means of both cameras 1,2 perform the same function. That is why they are indicated with the same reference numbers.

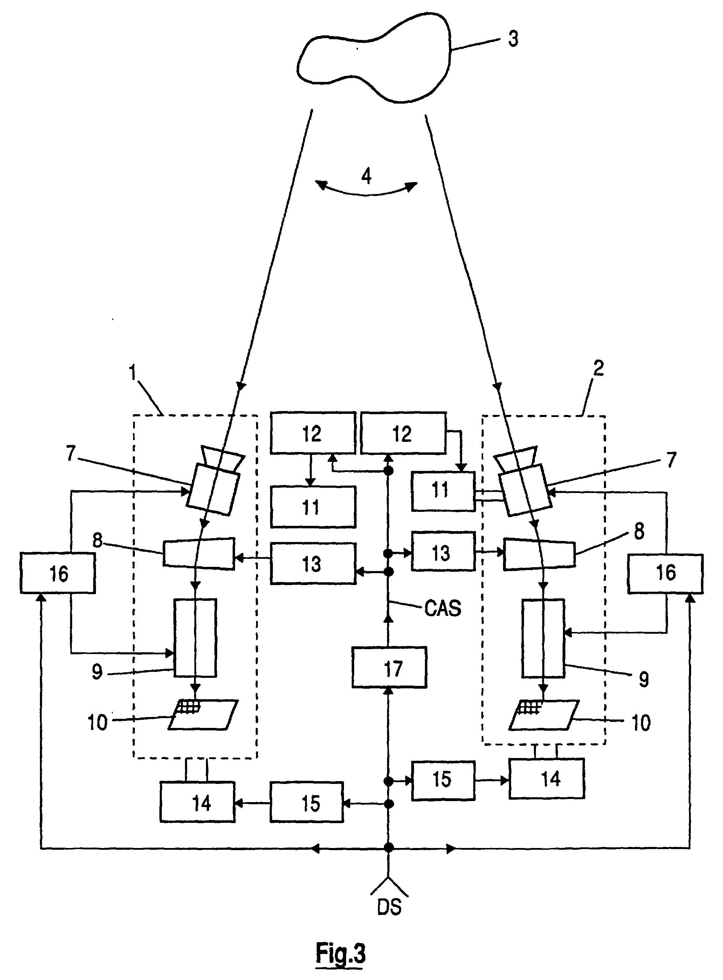

Fig. 3 shows more detailed schematics of a embodiment of a stereo camera system. Means having same functions as in the preceding figures are marked with the same reference numbers.

The two cameras 1, 2 are formed by cameras according to Fig. 1, each comprising an objective lens system 7, a vari-angle prism 8, an intermediate lens system 9 and an image device 10. The rotation of the objective lens system 7 of each camera 1, 2 is controlled by a respective rotation mechanism 11, together with controllers 12. The deflection angles of the vari-angle prisms 8 are controlled by controllers 13.

Both cameras 1, 2 can be moved independent from each other by a respective moving mechanism 14 controlled by a controller 15, respectively.

The focus of each camera 1, 2 is controlled by a focus controller 16 provided for each camera 1, 2. Both focus controllers 16 are controlled by a distance signal DS of the distance between the cameras and the target object 3 which is measured appropriately. This distance signal DS is also used to control the moving mechanisms 14 by the controllers 15. With a signal converter 17 this distance signal DS is converted into a convergence angle signal CAS, which is necessary for the rotation and the deflection angle controllers 12, 13.

It is possible that the signal DS is determined e.g. by not shown detecting means, which get input signals from said image devices 10, by a manual-input signal from a camera operator, or thelike. These input signals are a mass for the position of object 3 in relation to the direction of the whole camera 1. As said input signal depends also on control parameters for rotation mechanism 11 and prism 8, a closed loop control of said input signals and of signal CAS can be realsied.

Of course, also other kind of detecting means are possible which detect the distance between camera system 1, 2 and object 3. Such means are well known for focus-control and may work with electromagnetical, optical and/or acoustical ray detection and may include as well receiving means as transmitting means for said rays.

By the present invention it is possible for a wide range of possible values of the convergence angle and the target object distance, to keep the intermediate optics 9, i.e. the whole camera, fixed. By controlling the deflection angle of the vari-angle prism 8 it is only necessary that the objective lens optics 7 of the cameras 1, 2 is rotated. The stereoscopic camera system is not limited to the use of two cameras. According to the application it is possible to use more than two cameras.

**Claims**

1. A camera (1, 2) comprising:

   a rotatable objective lens system (7);
   an intermediate lens system (9);
   a controllable light deflecting device (8) located between the objective lens system (7) and the intermediate lens system (9);
   an imager device (10) which receives images from said intermediate lens system, and produces an image signal (IS); and
   circuitry (20, 12, 13) responsive to said image signal (IS) for generating a convergence angle signal (CAS) responsive to an imaged object for controlling said controllable light deflecting device (8) and said rotatable objective lens system, said image signal depending on relative position between said camera (1, 2) and a target object (3).

2. Camera according to claim 1 **characterized in that** the controllable light deflecting device (8) is an electro-optical device, such as a variangle prism or a variangle plate.

3. Camera according to claim 1 **characterized in that** it comprises rotating means (11) for rotating said rotatable lens system and wherein said circuitry responsive to said image signal (IS) includes means (12, 13) for controlling said rotating means (11) and said light deflecting device (8).

4. A stereoscopic camera system, comprising:

   a plurality of cameras, each said camera (1, 2) capable of focusing at a target object (3) wherein a convergence angle between two of said cameras and the object can be controlled, each said camera being a camera according to one of the preciding claims.

5. The stereoscopic camera system according to claim 4, **characterized in that** it comprises respective rotating means for rotating the respective rotatable objective lens system of each camera and wherein said respective rotating means and said respective deflecting devices are controlled responsive to a common convergence angle signal (GAS).

6. The stereoscopic camera system according to claim 4, **characterized in that** at least one of said camera (1, 2) is provided with a moving mechanism (14) for moving said camera independently from the other one.

7. The stereoscopic camera system according to claims 4 to 6, **characterized in that** each camera (1, 2) is provided with a focus controller (16) for controlling the optics of the camera (1, 2).

8. The stereoscopic camera system according to claims 4 to 7, **characterized in that** all controllers (12, 13, 16) of the system are controlled in dependance function of a distance signal (DS).

**Patentansprüche**

1. Kamera (1, 2) mit:

   einem drehbaren Objektivlinsensystem (7),
   einem Zwischenlinsensystem (9),
   einer steuerbaren Lichtablenkeinheit (8) zwischen dem Objektivlinsensystem (7) und dem Zwischenlinsensystem (9),
   einer Bildeinheit (10), die Bilder von dem Zwischenlinsensystem empfängt und ein Bildsignal (IS) erzeugt, und
   einer auf das Bildsignal (IS) ansprechenden Schaltung (20, 12, 13) zur Erzeugung eines Konvergenzwinkelsignals (CAS), das auf ein abgebildetes Objekt anspricht, zur Steuerung der steuerbaren Lichtablenkmittel (8) und des drehbaren Objektivlinsensystems (7), wobei das Bildsignal von der relativen Lage zwischen der Kamera (1, 2) und dem Zielobjekt (3) abhängig ist.

2. Kamera nach Anspruch 1, **dadurch gekennzeichnet, dass** die steuerbare Lichtablenkeinheit (8) eine elektrooptische Einheit ist, wie ein Prisma mit variablem Winkel oder eine Platte mit variablem Winkel.

3. Kamera nach Anspruch 1, **dadurch gekennzeichnet, dass** sie Drehmittel (11) für die Drehung des drehbaren Linsensystems enthält, wobei die auf das Bildsignal (IS) ansprechende Schaltung Mittel (12, 13) zur Steuerung der Drehmittel (11) und der Lichtablenkeinheit (8) enthält.

4. Stereoskopisches Kamerasystem mit:

mehreren Kameras, wobei jede Kamera (1, 2) in der Lage ist, auf ein Zielobjekt (3) zu fokussieren, wobei ein Konvergenzwinkel zwischen den beiden Kameras und dem Objekt gesteuert werden kann und jede Kamera eine Kamera nach einem der vorangehenden Ansprüche ist.

5. Stereoskopisches Kamerasystem nach Anspruch 4, **dadurch gekennzeichnet, dass** es jeweilige Drehmittel für die Drehung der jeweiligen drehbaren Ojektivlinsensysteme jeder Kamera enthält und die jeweiligen Drehmittel und die jeweiligen Ablenkeinheiten durch ein gemeinsames Konvergenzwinkelsignal (CAS) gesteuert werden.

6. Stereoskopisches Kamerasystem nach Anspruch 4, **dadurch gekennzeichnet, dass** wenigstens eine Kamera (1, 2) mit einem Bewegungsmechanismus (14) für die Bewegung der Kamera unabhängig von der anderen Kamera versehen ist.

7. Stereoskopisches Kamerasystem nach Anspruch 4 bis 6, **dadurch gekennzeichnet, dass** jede Kamera (1, 2) mit einer Fokussteuereinheit (16) zur Steuerung der Optik der Kamera (1, 2) versehen ist.

8. Stereoskopisches Kamerasystem nach Anspruch 4 bis 7, **dadurch gekennzeichnet, dass** alle Steuereinheiten (12, 13, 16) des Systems abhängig von einem Abstandssignal (DS) gesteuert werden.

**Revendications**

1. Caméra (1, 2) comprenant :

un système de lentille d'objectif orientable (7) ;
un système à lentille intermédiaire (9) ;
un dispositif à déviation de lumière orientable (8) positionné entre le système de lentille d'objectif (7) et le système à lentille intermédiaire (9) ;
un dispositif d'image (10) qui reçoit des images dudit système à lentille intermédiaire, et produit un signal d'image (IS) ; et
des circuits (20, 12, 13) répondant audit signal d'image (IS) pour la génération d'un signal d'angle de convergence (CAS) répondant à un objet imagé pour le contrôle dudit dispositif à déviation de lumière orientable (8) et dudit système de lentille d'objectif orientable, et ledit signal d'image dépendant de la position relative entre ladite caméra (1, 2) et un objet cible (3).

2. Caméra conforme à la revendication 1, **caractérisée en ce que** le dispositif à déviation de lumière orientable (8) est un dispositif électro-optique, tel un prisme à angle variable ou une plaque à angle variable.

3. Caméra conforme à la revendication 1, **caractérisée en ce qu'**elle comprend des dispositifs de rotation (11) pour faire pivoter ledit système de lentille orientable et dans laquelle lesdits circuits répondant audit signal d'image (IS) incluent des dispositifs (12, 13) pour le contrôle desdits dispositifs de rotation (11) et dudit dispositif à déviation de lumière (8).

4. Un système de caméra stéréoscopique, comprenant :

une pluralité de caméras, chacune desdites caméras (1, 2) étant capable de se diriger sur un objet cible (3), où un angle de convergence entre deux desdites caméras et l'objet peut être contrôlé, chacune desdites caméras étant une caméra conforme à l'une des revendications précédentes.

5. Le système de caméra stéréoscopique conforme à la revendication 4, **caractérisé en ce qu'**il comprend des dispositifs de rotation respectifs pour faire pivoter le système de lentille d'objectif orientable respectif de chaque caméra et dans lequel lesdits dispositifs de rotation respectifs et lesdits dispositifs de déviation respectifs sont contrôlés en réponse à un signal d'angle de convergence commun (CAS).

6. Le système de caméra stéréoscopique conforme à la revendication 4, **caractérisé en ce qu'**au moins l'une desdites caméras (1, 2) est équipée d'un mécanisme mobile (14) pour déplacer ladite caméra indépendamment de l'autre.

7. Le système de caméra stéréoscopique conforme aux revendications 4 à 6, **caractérisé en ce que** chaque caméra (1, 2) est équipée d'un contrôleur optique (16) pour contrôler l'optique de la caméra (1, 2).

8. Le système de caméra stéréoscopique conforme aux revendications 4 à 7, **caractérisé en ce que** tous les contrôleurs (12, 13, 16) du système sont contrôlés en fonction d'un signal à distance (DS).

**Fig.1**

**Fig.2**

**Fig.3**

Prior Art

**Fig.4**